# EUROPÄISCHE PATENTSCHRIFT

(11) **EP 3 031 357 B1**
(45) Veröffentlichungstag und Bekanntmachung des Hinweises auf die Patenterteilung: **26.07.2017**
(21) Anmeldenummer: 14196890.9
(22) Anmeldetag: 09.12.2014
(51) Int. Cl.: A47C 1/027, F16C 11/10

(54) **Schwenkbeschlag**
Pivotal fitting
Ferrure pivotante

(43) Veröffentlichungstag der Anmeldung: 15.06.2016
(73) Patentinhaber: Schätti AG, 8762 Schwanden (CH); Schätti Bulgaria EOOD, 4205 Kostievo (BG)
(72) Erfinder: Schätti, Josef, 8762 Schwanden (CH); Borissov, Iavor, 4004 Plovdiv (BG)
(74) Vertreter: Hepp Wenger Ryffel AG

(56) Entgegenhaltungen:
- WO-A1-2013/164921
- JP-A- 2014 104 027

## Beschreibung

Die vorliegende Erfindung betrifft einen Schwenkbeschlag gemäss dem Oberbegriff des unabhängigen Anspruches, beispielsweise für Sitz- oder Liegemöbel, wie Sessel oder Betten.

Aus dem Stand der Technik sind verschiedene derartige Schwenkbeschläge bekannt, beispielsweise mit Stufen oder Rasten. Nachteilig ist bei diesen bekannten Beschlägen insbesondere, dass der Beschlag nur in vorbestimmten Positionen arretiert werden kann. Ebenfalls nachteilig ist der Umstand, dass zum Lösen des Schwenkbeschlags dieser jeweils in eine Endposition gebracht werden muss.

Aus der WO 2013/164921 ist ein Schwenkbeschlag bekannt geworden, der es ermöglicht, den Beschlag stufenlos einzustellen. Der Beschlag umfasst eine erste und eine zweite Lasche, wobei diese über eine Schlingfeder miteinander verbunden sind. Eine Lasche ist mit einer Achse drehbar in der Schlingfeder gelagert. Durch eine Bewegung quer zur Richtung der Achse wird eine Selbsthemmung verursacht. Zum Lösen dieses Schwenkbelages wird vorgeschlagen, die Schlingfeder mit einem Halteelement zu unterstützen, so dass die Selbsthhemmung unterbunden wird. Besonders nachteilig dabei ist, dass ein Lösen dieses Schwenkbeschlages ebenfalls nur in den Endpositionen möglich ist. Ein erneutes Arretieren resp. in Funktion bringen der Schlingfeder ist ebenfalls nur in einer Endposition des Schwenkbeschlages möglich.

Ebenfalls nachteilig ist die mechanische Belastung der Schlingfeder durch das Mittel zum Arretieren.

Es ist Aufgabe der Erfindung, die Nachteile des Standes der Technik zu überwinden. Insbesondere soll ein Schwenkbeschlag zur Verfügung gestellt werden, der einfach herstellbar ist, stufenlos verstellbar ist, und unabhängig von einer Endposition arretiert und gelöst werden kann.

Diese Aufgabe wird durch den im unabhängigen Patentanspruch definierten Schwenkbeschlag gelöst. Weitere Ausführungsformen ergeben sich aus den abhängigen Patentansprüchen.

Ein erfindungsgemässer Schwenkbeschlag umfasst eine erste Lasche, eine zweite Lasche und eine Schlingfeder. Die zweite Lasche weist einen Wellenstummel auf, welcher eine Schwenkachse definiert. Die Schlingfeder ist als Lagerelement ausgebildet. Die zweite Lasche ist mit dem Wellenstummel im Lagerelement schwenkbar gelagert. Durch Verlagerung des Wellenstummels im Wesentlichen senkrecht zur Schwenkachse, ist die zweite Lasche festklemmbar. Am Wellenstummel ist ein verschieblich gelagertes Entriegelungselement angeordnet. Dieses wirkt in einer Entriegelungsposition durch Abstützen des Wellenstummels der Verlagerung des Wellenstummels entgegen.

Das Lagerelement kann mehrere Schlingfedern umfassen, vorzugsweise drei Schlingfedern. Dies erlaubt, Klemmwirkung und Kraftverlauf genau einzustellen. Es ist ebenfalls möglich, dass der Schwenkbeschlag zwei oder mehrere Lagerelemente umfasst und vorzugsweise genau zwei. Dies ermöglicht einen im Wesentlichen symmetrischen Aufbau des Schwenkbeschlages.

Verschieblich gelagert heisst hier und im Folgenden, dass das Entriegelungselement am Wellenstummel zumindest teilweise drehbar ist, oder in Umfangsrichtung bewegt werden kann. Vorzugsweise ist das Entriegelungselement auf den Wellenstummel geklemmt, sodass es durch Reibung an Ort gehalten wird.

Die zweite Lasche ist vorzugsweise bezüglich der ersten Lasche in einer Schwenkrichtung drehbar. Durch Schwenken der Lasche entgegen der ersten Schwenkrichtung entsteht eine kraftschlüssige Verbindung zwischen Wellenstummel und Lagerelement. Das Lagerelement verformt sich so, dass die Reibung zwischen Wellenstummel und Lagerelement dermassen erhöht wird, dass eine Klemmwirkung auftritt.

Das verschieblich gelagerte Entriegelungselement ermöglicht es, den Wellenstummel zur Entriegelung insbesondere direkt abzustützen. Durch die Abstützung am Wellenstummel ist der Kraftverlauf optimiert. Die Schlingfeder resp. das Lagerelement wird nicht unnötig belastet. Vorzugsweise weist die Schlingfeder Federenden auf, welche an der ersten Lasche festgehalten sind.

Dies ermöglicht die spezifische Wahl von Festhaltepunkten und in der Folge kann die Schlingfeder geometrisch dermassen dimensioniert werden, dass sowohl Klemmwirkung als auch Verfahrwege den nötigen Spezifikationen entsprechend eingestellt werden können.

Dabei umfasst die Schlingfeder den Wellenstummel vorzugsweise nicht vollständig sondern nur beispielsweise auf 80% und vorzugsweise auf 90 - 95% des Umfangs.

Der Wellenstummel ist vorzugsweise mehrteilig ausgebildet und weist insbesondere einen Wellenstummelkern und eine Aufsteckhülse auf. Wellenstummelkern und Aufsteckhülse können formschlüssig miteinander verbunden sein. Vorzugsweise sind die beiden Elemente über einen polygonalen Querschnitt miteinander verbunden. Die Aufsteckhülse weist vorzugsweise eine im Wesentlichen zylindrische Aussenfläche auf.

Ein mehrteiliger Wellenstummel ermöglicht die Gestaltung des Schwenkbeschlags derart, dass dieser beispielsweise in unterschiedlichen Positionen zusammensteckbar ist. Somit kann ein Schwenkbeschlag geschaffen werden, in welchem für verschiedene Anwendungsmöglichkeiten die Grundmechanik jeweils nicht verändert werden muss. Es ist lediglich nötig, den Wellenstummel in unterschiedlichen Positionen zusammen zu fügen, um einen Schwenkbeschlag bereit zu stellen, der unterschiedlichen Anforderungen wie Öffnungswinkel oder Basisposition entspricht.

Vorzugsweise weist der Schwenkbeschlag Anschlagelemente auf, zum Beschränken der Bewegung der zweiten Lasche relativ zur ersten Lasche. Vorzugsweise ist ein Anschlagelement am Wellenstummel angeordnet, welches die Bewegung der zweiten Lasche relativ zur ersten Lasche zwischen einer ersten und einer zweiten Endposition beschränkt.

Dies ermöglicht das Definieren von Endpositionen innerhalb des Schwenkbeschlags. Zusätzliche Anschläge sind nicht mehr nötig. Das Anschlagelement kann als Aufsteckring ausgebildet sein. Zur schwenkbaren Verbindung mit dem Wellenstummel weist das Anschlagselement vorzugsweise eine Nase auf, wobei die Nase bevorzugt in eine Kerbe des Wellenstummels eingreift. Vorzugsweise sind Nase und Kerbe derart ausgebildet und greifen derart ineinander ein, dass das Anschlagelement zum Wellenstummel um 15° und insbesondere um 10° und besonders bevorzugt um 5° verdrehbar ist.

Somit weist das Anschlagelement am Wellenstummel zumindest zwei drehfeste Endpositionen auf, wobei jeweils diese Endpositionen in einer Drehrichtung drehfest sind. Das Anschlagelement ist somit in zumindest zwei Positionen bringbar, die es ermöglichen, bezüglich der Anschlagpositionen der Lasche einen Versatz zu generieren.

Das Entriegelungselement ist vorzugsweise zumindest teilweise um den Wellenstummel angeordnet und mit einem Vorsprung versehen. Der Vorsprung kann in einer Verriegelungsposition mit einer Anschlagfläche der ersten Lasche zusammenwirken. Das Zusammenwirken des Entriegelungselementes mit einer Anschlagfläche der ersten Lasche ermöglicht es, dass der Schwenkbeschlag ein in sich geschlossenes Kraftsystem bildet.

Vorzugsweise wirkt das Entriegelungselement in der Entriegelungsposition mit einer Haltefläche der ersten Lasche zusammen.

Der Schwenkbeschlag bildet somit eine in sich abgeschlossene Einheit.

Der Schwenkbeschlag ist vorzugsweise derart ausgeführt, dass durch Schwenken der zweiten Lasche in die Endposition das Anschlagelement der Verlagerung des Wellenstummels entgegenwirkt. Das Anschlagelement ist insbesondere über eine Kulisse in Wirkverbindung mit einer Freigabefläche bringbar. Vorzugsweise ist die Freigabefläche an einer der Laschen angeordnet. Die Freigabefläche befindet sich vorzugsweise an der ersten Lasche.

Diese ermöglicht es, dass beim Schwenken des Schwenkbeschlages in eine Endposition das Anschlagelement ebenfalls zumindest kurzzeitig der Verlagerung des Wellenstummels entgegen wirkt. Somit kann zumindest in einer Position eine allgemeine Freigabeposition geschaffen werden, in welcher die Schlingfeder den Wellenstummel nicht festklemmt.

Vorzugsweise ist das Anschlagelement durch Schwenken der zweiten Lasche in die Entriegelungsposition bringbar. Vorzugsweise wird dabei die zweite Lasche aus der ersten Endposition in Richtung der zweiten Endposition geschwenkt.

Somit ist eine definierte Position geschaffen, in welcher das Anschlagelement der Verlagerung des Wellenstummels entgegen wirkt.

Das Entriegelungselement ist vorzugsweise durch Schwenken der zweiten Lasche in Richtung der zweiten Endposition in eine Verriegelungsposition bringbar.

Somit kann eine definierte Position bereitgestellt werden, in welche der Schwenkbelag derart verlagert werden kann, dass der Wellenstummel in der Schlingfeder festgeklemmt ist.

Das Entriegelungselement kann durch Schwenken der zweiten Lasche in Richtung der ersten Endposition in eine Freigabeposition bringbar sein.

Dies ermöglicht die Betätigung des Schwenkbeschlages lediglich durch das Schwenken der einzelnen Laschen.

Anhand von Figuren, welche lediglich Ausführungsbeispiele darstellen, wird die Erfindung im Folgenden näher erläutert. Es zeigen:
- Figur 1:: Eine perspektivische Explosionsdarstellung eines erfindungsgemässen Schwenkbeschlags, und
- Figur 2a - 2c: Details aus dem Ver- und Entriegelungsvorgang des Schwenkbeschlages in einer schematischen Darstellung.

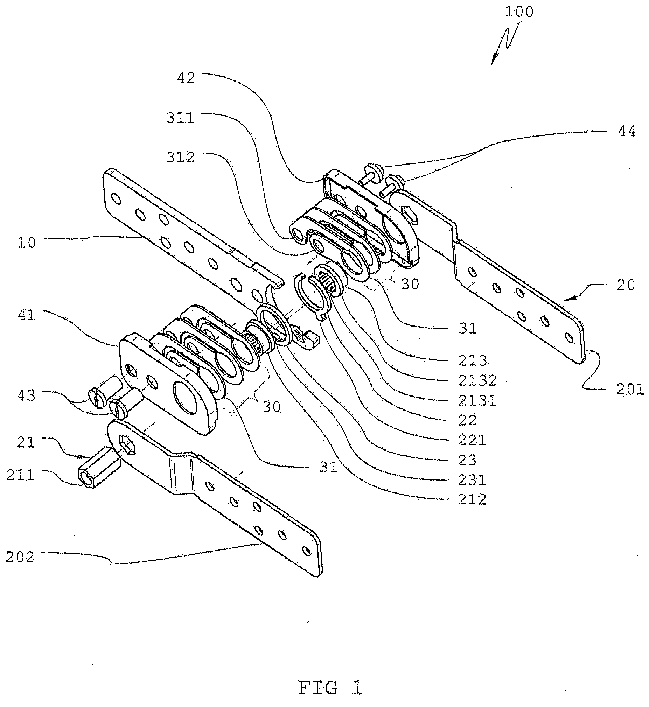

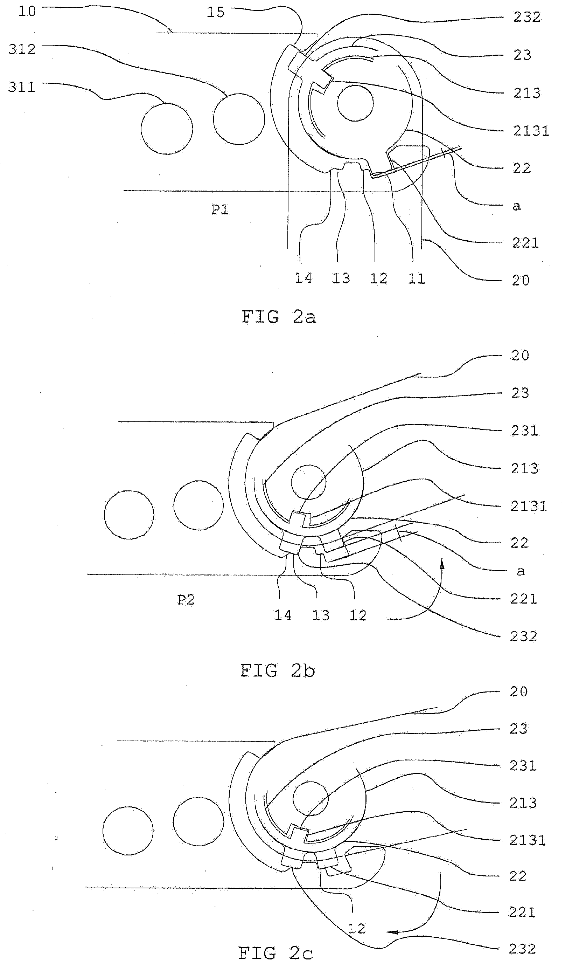

Figur 1 zeigt eine Explosionsdarstellung des Schwenkbeschlages 100 in einer perspektivischen Ansicht. Der Schwenkbeschlag 100 umfasst eine erste Lasche 10 und eine zweite Lasche 20, welche aus einem ersten und einem zweiten Laschenteil 201 und 202 besteht. Der Schwenkbeschlag 100 umfasst weiter zwei Lagerelemente 30 welche jeweils ein Paket aus drei Schlingfedern 31 (jeweils nur eine bezeichnet) umfasst. Das erste Laschenteil 201 und das zweite Laschenteil 202 der zweiten Lasche 20 sind über einen Sechskant 211 miteinander verbunden. Der Sechskant 211 bildet zusammen mit einer ersten Aufsteckhülse 212 und einer zweiten Aufsteckhülse 213 gemeinsam den Wellenstummel 21. Der Wellenstummel 21 durchdringt in zusammengebautem Zustand die zwei Lagerelemente 30. Die Lagerelemente 30 sind mit zwei Gehäusehälften 41, 42 verschlossen und Schrauben 43, 44 mit der ersten Lasche 10 verbunden. Die zweite Aufsteckhülse 213 weist einen Rand 2132 auf, wobei in dem Rand 2132 eine Kerbe 2131 angeordnet ist (siehe dazu auch Figur 2a). Das Entriegelungselement 22 weist eine Nase 221 auf, deren Funktion in den folgenden Figuren noch genauer beschrieben wird. Das Anschlagelement 23 weist eine Anschlagnase 231 und eine hier nicht sichtbare Nase 232 (siehe Figuren 2a bis 2c) auf. Das Entriegelungselement 22 weist einen Innendurchmesser auf, welcher geringfügig kleiner ist, als der Aussendurchmesser des Randes der zweiten Aufsteckhülse 213. Somit ist das Entriegelungselement 22 auf den Rand der Aufsteckhülse 213 klemmbar. Das Entriegelungselement 22 ist somit verschieblich gelagert.

Die Figuren 2a bis 2c zeigen den Ver- und Entriegelungsvorgang des Schwenkbeschlages in einer symbolischen Darstellung. In Figur 2a ist die erste Lasche 10 und die zweite Lasche 20 gezeigt. Die erste Lasche 10 weist unterschiedliche Konturen auf, wobei mit 11 eine Anschlagfläche, mit 12 eine Haltefläche, mit 13 eine Freigabefläche und mit 14 eine Kulisse bezeichnet ist. In Figur 2a befindet sich der Schwenkbeschlag in einer festgeklemmten Position, vorliegend in der ersten Endposition P1. Die zweite Lasche 20 ist über die zweite Aufsteckhülse 213 des hier nicht gezeigten Wellenstummels in Wirkverbindung mit dem Anschlagelement 23. Das Anschlagelement 23 weist eine Nase 232 auf, welche mit einer Anschlagfläche 15 der ersten Lasche 10 in Wirkverbindung ist. Dies definiert die erste Endposition P1. Das Entriegelungselement 22 weist eine Nase 221 auf, die sich in einer Auskerbung der Lasche 10 befindet. In auf der Figur nach unten gerichteter Richtung ist ein Abstand a zwischen der Nase 221 und der Auskerbung erkennbar. Die Nase 221 steht an der Anschlagfläche 11 an. Durch Bewegung der zweiten Lasche 20 in der Pfeilrichtung aus Figur 2b, ist die zweite Lasche 20 bewegbar, wobei sie bei der Schwenkung entgegen der Pfeilrichtung aus Figur 2b in der hier nicht gezeigten Schlingfeder geklemmt ist. Die Lasche 20 kann in der vorliegenden Figur in nach oben gerichteter Richtung angehoben werden und entgegen der Pfeilrichtung aus Figur 2b bewegt werden. Die Klemmwirkung der Schlingfeder kann somit überbrückt werden. Bei genügend grosser Bewegung entgegen der Pfeilrichtung aus Figur 2 kann die Nase 221 des Entriegelungselementes 22 in Kontakt mit der Haltefläche 12 gebracht werden. Somit wirkt das Entriegelungselement 22 der Verlagerung des Wellenstummels entgegen. Durch Bewegen der Lasche in Pfeilrichtung aus Figur 2b kann das Entriegelungselement 22 wieder in die in Figur 2a gezeigte Position gebracht werden. Die Funktion des Schwenkbeschlages ist somit wieder gewährleistet.

Figur 2b zeigt den Schwenkbeschlag aus Figur 2a in seiner zweiten Endposition P2. Die Lasche 20 wurde bis zu der Endposition in Pfeilrichtung bewegt. In der Endposition ist die Nase 232 des Anschlagelementes 23 in Kontakt mit einer Freigabefläche 13. Das Anschlagelement 23 ist mit einer Anschlagnase 231 in Wirkverbindung mit einer Kerbe 2131 der zweiten Aufsteckhülse 213 und wird somit mit der zweiten Aufsteckhülse 213 und damit mit der zweiten Lasche 20 bewegt. Die Nase 232 ist bei der Bewegung von der Position nach Figur 2a zur Position nach Figur 2b über die Kulisse 14 gedrückt worden. Dieses in vorliegender Darstellung nach oben Drücken entlastet die Schlingfeder, wobei die Schlingfeder im entlasteten Zustand den Wellenstummel freigibt und nicht mehr festklemmt. Der Wellenstummel ist somit senkrecht zur Schwenkachse bewegbar. Wie in Figur 2b ersichtlich, ist der in der Figur nach unten gerichtete Abstand a zwischen der Nase 221 und der Auskerbung im Vergleich zum Abstand in Figur 2a deutlich grösser.

Der Schwenkbeschlag kann nun vollständig in die ursprüngliche Position zurück gedreht werden. Eine Drehung gemäss des Pfeiles in Figur 2c bewirkt ein Mitnehmen des Entriegelungselementes 22, da dieses verschieblich, jedoch über Reibung geklemmt, an der zweiten Aufsteckhülse 213 gelagert ist. Die Nase 221 des Entriegelungselementes 22 wird somit in Pfeilrichtung mitbewegt, bis die Nase in Wirkverbindung mit einer Haltefläche 12 der ersten Lasche 10 ist. Dies wird dadurch ermöglicht, dass die Kerbe 2131 in der zweiten Aufsteckhülse 213 grösser ist, als die Abmessung der Anschlagnase 231 der zweiten Aufsteckhülse 213. Somit ist die Nase 232 des Anschlagelementes 23 solange in Kontakt mit der Freigabefläche 13, bis die Nase 221 des Entriegelungselementes 22 in Kontakt mit der Freigabefläche 12 ist. Wird die Lasche 20 in der Figur 2c in Pfeilrichtung weiter gedreht, so greifen Anschlagnase 231 und Kerbe 2131 ineinander ein, sodass die Nase 232 des Anschlagelementes 23 wieder Richtung erster Endposition (siehe dazu auch Figur 2a) gedreht wird. Da sich die Nase 221 des Entriegelungselementes 22 auf der Haltefläche 12 befindet, ist die Verlagerung des Wellenstummels senkrecht zur Schwenkachse nicht möglich. Somit kann während dieses Vorgangs keine Klemmwirkung eintreten. Der Vorgang kann jedoch in jeder Position unterbrochen werden, indem die Lasche 20 entgegen der Pfeilrichtung aus Figur 2c bewegt wird, solange, bis die Nase 221 von der Haltefläche 12 in einen hier nicht bezeichneten Freiraum bewegt wird. Damit ist die Funktion der Schlingfeder wieder gegeben.

## Patentansprüche

1. Schwenkbeschlag (100), umfassend eine erste Lasche (10), eine zweite Lasche (20) mit einem Wellenstummel (21), welcher eine Schwenkachse (A) definiert und zumindest eine Schlingfeder (31) als Lagerelement (30),
wobei die zweite Lasche (20) mit dem Wellenstummel (21) im Lagerelement (30) schwenkbar gelagert ist und durch Verlagerung des Wellenstummels (21) im Wesentlichen senkrecht zur Schwenkachse (A) festklemmbar ist
**dadurch gekennzeichnet, dass** am Wellenstummel (21) ein verschieblich gelagertes Entriegelungselement (22) angeordnet ist, welches Entriegelungselement (22) in einer Entriegelungsposition durch Abstützen des Wellenstummels (21) der Verlagerung des Wellenstummels (21) entgegenwirkt.

2. Schwenkbeschlag nach Anspruch 1, **dadurch gekennzeichnet, dass** die Schlingfeder (31) Federenden (311; 312) aufweist, welche Federenden (311; 312) an der ersten Lasche (10) festgehalten sind.

3. Schwenkbeschlag nach einem der Ansprüche 1 bis 2, **dadurch gekennzeichnet, dass** der Wellenstummel (21) mehrteilig ausgebildet ist und insbesondere einen Wellenstummelkern (211) und eine Aufsteckhülse (212) aufweist, welche formschlüssig miteinander verbunden sind, insbesondere mit einem polygonalen Querschnitt, wobei die Aufsteckhülse eine im Wesentlichen zylindrische Aussenfläche aufweist.

4. Schwenkbeschlag nach einem der Ansprüche 1 bis 3, **dadurch gekennzeichnet, dass** am Wellenstummel (21) ein Anschlagelement (23) zum Beschränken der Bewegung der zweiten Lasche (20) relativ zur ersten Lasche (10) zwischen einer ersten Endposition (P1) und einer zweiten Endposition (P2) angeordnet ist.

5. Schwenkbeschlag nach Anspruch 4, **dadurch gekennzeichnet, dass** das Anschlagelement (23) als Aufsteckring ausgebildet ist, wobei das Anschlagelement (23) eine Nase (232) zur schwenkbaren Verbindung mit dem Wellenstummel (21) aufweist, wobei die Nase (232) vorzugsweise in eine Kerbe (213) des Wellenstummels (21) eingreift, derart, dass das Anschlagelement (23) zum Wellenstummel (21) um 15°, insbesondere um 10° und besonders bevorzugt um 5° verdrehbar ist.

6. Schwenkbeschlag nach einem der Ansprüche 1 bis 5, **dadurch gekennzeichnet, dass** das Entriegelungselement (22) zumindest teilweise um den Wellenstummel (21) angeordnet ist und mit einem Vorsprung (221) versehen ist, welcher in einer Verriegelungsposition mit einer Anschlagfläche (11) der ersten Lasche (10) zusammenwirkt.

7. Schwenkbeschlag nach einem der Ansprüche 1 bis 6, **dadurch gekennzeichnet, dass** das Entriegelungselement (22) in der Entriegelungsposition mit einer Haltefläche (12) der ersten Lasche zusammenwirkt.

8. Schwenkbeschlag nach einem der Ansprüche 4 bis 7, **dadurch gekennzeichnet, dass** durch Schwenken der zweiten Lasche (20) in die Endposition (P2) das Anschlagelement (22) der Verlagerung des Wellenstummels (21) entgegenwirkt, wobei insbesondere das Anschlagelement (22) über eine Kulisse (14) in Wirkverbindung mit einer Freigabefläche (13) bringbar ist.

9. Schwenkbeschlag nach Anspruch 8, wobei das Anschlagelement (22) durch Schwenken der zweiten Lasche (20) in die Entriegelungsposition bringbar ist, insbesondere durch Schwenken der zweiten Lasche (22) aus der ersten Endposition (P1) in Richtung der zweiten Endposition (P2).

10. Schwenkbeschlag nach einem der Ansprüche 1 bis 9, **dadurch gekennzeichnet, dass** durch Schwenken der zweiten Lasche (20) in Richtung der zweiten Endposition (P2) das Entriegelungselement (22) in eine Verriegelungsposition bringbar ist.

11. Schwenkbeschlag nach einem der Ansprüche 1 bis 10, **dadurch gekennzeichnet, dass** das Entriegelungselement durch Schwenken der zweiten Lasche (20) in Richtung der ersten Endposition (P1) in eine Freigabeposition bringbar ist.

## Claims

1. Pivot fitting (100), comprising a first lug (10), a second lug (20) with a shaft stub (21) which defines a pivot axis (A), and at least one wrap spring (31) as bearing element (30),
wherein the second lug (20) with the shaft stub (21) is mounted in a pivotable manner in the bearing element (30) and is able to be firmly clamped by displacement of the shaft stub (21) substantially perpendicularly to the pivot axis (A),
**characterized in that** an unlocking element (22) that is mounted in a movable manner is arranged on the shaft stub (21), which unlocking element (22) counteracts the displacement of the shaft stub (21) in an unlocking position by supporting the shaft stub (21).

2. Pivot fitting according to Claim 1, **characterized in that** the wrap spring (31) has spring ends (311; 312), which spring ends (311; 312) are firmly held on the first lug (10).

3. Pivot fitting according to either of Claims 1 and 2, **characterized in that** the shaft stub (21) is formed in a multipart manner and has in particular a shaft stub core (211) and a slip-on sleeve (212), which are connected together in a form-fitting manner, in particular with a polygonal cross section, wherein the slip-on sleeve has a substantially cylindrical outer surface.

4. Pivot fitting according to one of Claims 1 to 3, **characterized in that** a stop element (23) for limiting the movement of the second lug (20) relative to the first lug (10) to between a first end position (P1) and a second end position (P2) is arranged on the shaft stub (21).

5. Pivot fitting according to Claim 4, **characterized in that** the stop element (23) is configured as a slip-on ring, wherein the stop element (23) has a nose (232) for pivotable connection to the shaft stub (21), wherein the nose (232) preferably engages in a notch (213) in the shaft stub (21) such that the stop element (23) is rotatable through 15°, in particular through 10° and particularly preferably through 5° with respect to the shaft stub (21).

6. Pivot fitting according to one of Claims 1 to 5, **characterized in that** the unlocking element (22) is arranged at least partially around the shaft stub (21) and is provided with a protrusion (221) which interacts with a stop surface (11) of the first lug (10) in a locking position.

7. Pivot fitting according to one of Claims 1 to 6, **characterized in that** the unlocking element (22) interacts with a retaining surface (12) of the first lug in the unlocking position.

8. Pivot fitting according to one of Claims 4 to 7, **characterized in that**, as a result of the second lug (20) being pivoted into the end position (P2), the stop element (22) counteracts the displacement of the shaft stub (21), wherein in particular the stop element (22) is able to be operatively connected to a release surface (13) via a slotted guide (14).

9. Pivot fitting according to Claim 8, wherein the stop element (22) is able to be brought into the unlocking position by pivoting of the second lug (20), in particular by pivoting of the second lug (22) from the first end position (P1) in the direction of the second end position (P2).

10. Pivot fitting according to one of Claims 1 to 9, **characterized in that**, as a result of the second lug (20) being pivoted in the direction of the second end position (P2), the unlocking element (22) is able to be brought into a locking position.

11. Pivot fitting according to one of Claims 1 to 10, **characterized in that** the unlocking element is able to be brought into a release position by the second lug (20) being pivoted in the direction of the first end position (P1).

## Revendications

1. Ferrure pivotante (100), comprenant une première patte (10), une deuxième patte (20) avec un bout d'arbre (21) qui définit un axe de pivotement (A) et au moins un ressort en boucle (31) en tant qu'élément de support (30),
la deuxième patte (20) étant supportée dans l'élément de support (30) de manière à pouvoir pivoter avec le bout d'arbre (21) et pouvant être serrée fixement par déplacement du bout d'arbre (21) essentiellement perpendiculairement à l'axe de pivotement (A), **caractérisée en ce qu'**un élément de déverrouillage (22) supporté de manière coulissante est disposé sur le bout d'arbre (21), lequel élément de déverrouillage (22), dans une position de déverrouillage, agit à l'encontre du déplacement du bout d'arbre (21) par support du bout d'arbre (21).

2. Ferrure pivotante selon la revendication 1, **caractérisée en ce que** le ressort en boucle (31) présente des extrémités de ressort (311 ; 312), lesquelles extrémités de ressort (311 ; 312) sont retenues fixement sur la première patte (10).

3. Ferrure pivotante selon l'une quelconque des revendications 1 à 2, **caractérisée en ce que** le bout d'arbre (21) est réalisé en plusieurs parties et présente notamment un noyau de bout d'arbre (211) et une douille d'enfichage (212), lesquels sont connectés l'un à l'autre par engagement par correspondance de formes, en particulier avec une section transversale polygonale, la douille d'enfichage présentant une surface extérieure essentiellement cylindrique.

4. Ferrure pivotante selon l'une quelconque des revendications 1 à 3, **caractérisée en ce qu'**un élément de butée (23) est disposé sur le bout d'arbre (21) pour limiter le mouvement de la deuxième patte (20) par rapport à la première patte (10) entre une première position d'extrémité (P1) et une deuxième position d'extrémité (P2).

5. Ferrure pivotante selon la revendication 4, **caractérisée en ce que** l'élément de butée (23) est réalisé sous forme de bague enfichable, l'élément de butée (23) présentant un nez (232) pour la connexion pivotante au bout d'arbre (21), le nez (232) s'engageant de préférence dans une encoche (213) du bout d'arbre (21), de telle sorte que l'élément de butée (23) puisse être tourné par rapport au bout d'arbre (21) de 15°, en particulier de 10° et particulièrement préférablement de 5°.

6. Ferrure pivotante selon l'une quelconque des revendications 1 à 5, **caractérisée en ce que** l'élément de déverrouillage (22) est disposé au moins en partie autour du bout d'arbre (21), et est pourvu d'une saillie (221) qui coopère dans une position de verrouillage avec une surface de butée (11) de la première patte (10).

7. Ferrure pivotante selon l'une quelconque des revendications 1 à 6, **caractérisée en ce que** l'élément de déverrouillage (22) coopère, dans la position de déverrouillage, avec une surface de retenue (12) de la première patte.

8. Ferrure pivotante selon l'une quelconque des revendications 4 à 7, **caractérisée en ce que** par pivotement de la deuxième patte (20) dans la position d'extrémité (P2), l'élément de butée (22) s'oppose au déplacement du bout d'arbre (21), l'élément de butée (22) pouvant notamment être amené en liaison fonctionnelle par le biais d'une coulisse (14) avec une surface de libération (13).

9. Ferrure pivotante selon la revendication 8, dans laquelle l'élément de butée (22) peut être amené dans la position de déverrouillage par pivotement de la deuxième patte (20), en particulier par pivotement de la deuxième patte (22) hors de la première position d'extrémité (P1) dans la direction de la deuxième position d'extrémité (P2).

10. Ferrure pivotante selon l'une quelconque des revendications 1 à 9, **caractérisée en ce que** par pivotement de la deuxième patte (20) dans la direction de la deuxième position d'extrémité (P2), l'élément de déverrouillage (22) peut être amené dans une position de verrouillage.

11. Ferrure pivotante selon l'une quelconque des revendications 1 à 10, **caractérisée en ce que** l'élément de déverrouillage peut être amené dans une position de libération par pivotement de la deuxième patte (20) dans la direction de la première position d'extrémité (P1).
